# EUROPÄISCHE PATENTSCHRIFT

(11) **EP 1 516 672 B1**
(45) Veröffentlichungstag und Bekanntmachung des Hinweises auf die Patenterteilung: **20.04.2011**
(21) Anmeldenummer: 04021875.2
(22) Anmeldetag: 15.09.2004
(51) Int. Cl.: B03B 5/62, B03B 13/00

(54) **Verfahren und Vorrichtung zum Abtrennen von organischem Material von anorganischem Material**
Method and apparatus for separating of organic from inorganic material
Procédé et dispositif pour la séparation de matière organique de matière inorganique

(30) Priorität: 22.09.2003 DE 10343788
(43) Veröffentlichungstag der Anmeldung: 23.03.2005
(73) Patentinhaber: Huber SE, 92334 Berching (DE)
(72) Erfinder: Branner, Wolfgang, 92334 Berching (DE)
(74) Vertreter: Bergmeier, Werner

(56) Entgegenhaltungen:
- EP-A- 0 469 360
- EP-A- 1 002 563
- DE-A- 19 805 451
- DE-A- 19 844 006
- DE-U- 29 614 456
- US-A- 630 309
- US-A- 1 277 145
- US-A- 5 167 375

## Beschreibung

Die Erfindung betrifft ein Verfahren und eine Vorrichtung zum Abtrennen von organischem Material von anorganischem Material, insbesondere von organisch verschmutztem Sand von Kläranlagen, mit einem Behälter, der in seinem oberen Bereich eine Beschickungseinrichtung für die Einleitung des verschmutzten anorganischen Materials in den Behälter aufweist, mit einer Im unteren Bereich des Behälters angeordneten Abzugseinrichtung für das abgetrennte anorganische Material, einer Einrichtung zur Abfuhr des organischen Materials und einer Zufuhreinrichtung für Waschwasser im unteren Bereich des Behälters, wobei oberhalb der Zufuhreinrichtung für Waschwasser im Behälter die Trennung des organischen Materials von dem anorganischen Material in einer fluidisierten Schicht erfolgt. Der Behälter der Vorrichtung kann insbesondere in Rundbauweise, aber auch mit polygonartigem Querschnitt erstellt werden. Er besitzt eine vertikale Achse und kann aus zylindrischen sowie kegelförmigen Abschnitten zusammengesetzt sein. Sinnvoll ist eine Querschnittserweiterung von unten nach oben. Die Vorrichtung dient zum Waschen des organisch verschmutzten Sandes. Durch die Abtrennung des organischen Materials wird das anorganische Material, also der Sand, gereinigt. Das abgetrennte organische Material kann zusammen mit dem Waschwasser, alternativ aber auch über eine gesonderte Abzugseinrichtung abgezogen werden.

Insbesondere das Material, welches aus dem Sandfang von Kläranlagen oder bei der Kanalreinigung aus dem Kanalnetz entnommen wird, aber auch Straßenkehricht, wie er von Kehrmaschinen aufgenommen wird, enthält neben dem anorganischen Material in Form von Sand, Steinen und dergleichen oft erhebliche Anteile an organischem Material. Um das anorganische Material einer Deponie zuzuführen oder anderweitig wiederverwenden zu können, muss es bis zu gewissem Grade von dem organischem Material befreit werden, um eine kostengünstige Entsorgung durchführen zu können.

### STAND DER TECHNIK

Eine Vorrichtung der eingangs beschriebenen Art ist aus der DE 44 15 647 C2 oder auch der EP 0 707 520 B1 bekannt. Die Vorrichtung weist einen Behälter mit vertikaler Achse auf. Der Behälter besitzt einen sich von unten nach oben abschnittsweise erweiternden Querschnitt. Im oberen Bereich ist eine Beschickungseinrichtung für die Einleitung des verschmutzten anorganischen Materials in den Behälter vorgesehen. Im unteren Bereich schließt an den Behälter eine Abzugseinrichtung für das abgetrennte gereinigte anorganische Material an, die aus einer schräg aufwärts geführten Schneckenfördervorrichtung besteht. Es ist eine Einrichtung zur Abfuhr des organischen Materials vorgesehen. Diese ist im oberen Bereich des Behälters angeordnet und besitzt eine Überfallkante, über die Waschwasser und anorganisches Material abgeführt werden. Im unteren Bereich des Behälters, oberhalb der Abzugseinrichtung für das abgetrennte anorganische Material ist eine Zufuhreinrichtung für Waschwasser vorgesehen, die einen Lochboden aufweist. Der Lochboden besitzt eine Vielzahl über den Querschnitt verteilt angeordneter Durchbrechungen, Düsen oder dergleichen, so dass mit seiner Hilfe eine über den Querschnitt verteilte und aufwärts gerichtete Strömung erzeugt wird. Das Waschwasser wird in einer solchen Menge pro Zeiteinheit zugeführt und verteilt über die Öffnungen des Lochbodens nach oben gerichtet abgegeben, dass oberhalb des Lochbodens eine fluidisierte Schicht entsteht, also eine Wirbelschicht, durch die das organisch verschmutzte anorganische Material in den für eine Wirbelschicht typischen Bewegungszustand versetzt wird, bei dem die Sandkörner immer wieder aufeinander sowie gegen die Wandung des Behälters prallen, so dass das anhaftende organische Material von dem anorganischen Material abgelöst wird. Durch das aufströmende Waschwasser wird darüber hinaus das organische Material nach oben abgeführt. Die erzeugte Wirbelschicht unterscheidet sich grundlegend von einem gerührten Festbett, in welchem sich die Sandkörner nicht frei bewegen können. Die erzeugte fluidisierte Schicht weist typischerweise eine gewisse Ausdehnungshöhe im Behälter auf, die mit Hilfe einer Druckmessdose überwacht wird. Die Signale der Druckmessdose können dazu benutzt werden, die Abzugseinrichtung für das abgetrennte anorganische Material zu steuern. Damit das Abzugsmaterial in den Bereich der Abzugseinrichtung gelangen kann, ist ein Bypass vorgesehen, der technisch auf vielfältige Weise realisiert werden kann, beispielsweise durch eine Öffnung im Mittelbereich des Lochbodens, die Anordnung einer Umgehungsleitung oder eine sonstige Öffnung, durch die auch das Waschwasser nach oben und der abgereinigte Sand in der Gegenrichtung nach unten durchtreten können. Im Behälter ist weiterhin ein Rührwerk angeordnet, das Rührarme aufweist, die im unteren Bereich der fluidisierten Sandschicht und/oder im unteren Bereich eines Sammelraums für das organische Material angeordnet sein können. Mit der bekannten Vorrichtung lässt sich eine effektive Trennung zwischen organischem und anorganischem Material herbeiführen. Allerdings wird die fluidisierte Schicht allein von dem zugeführten Waschwasser erzeugt, so dass dieses in entsprechender Menge pro Zeiteinheit zur Verfügung gestellt werden muss. Die Leerrohrgeschwindigkeit des Aufstromwassers beträgt etwa 5 bis 15 m/h. Die Rührarme des Rührwerks, die im unteren Bereich der fluidisierten Sandschicht und/oder im unteren Bereich des Sammelraums für das organische Material umlaufend angeordnet sind, verhindern einerseits eine Kanalbildung im unteren Bereich der fluidisierten Sandsicht und lockern andererseits die über der Sandschicht befindliche organische Masse auf, so dass über die Beschickungseinrichtung weiterhin zugegebenes verschmutztes Material die organische Schicht durchdringen und damit in den Bereich der fluidisierten Sandschicht gelangen kann.

Aus der EP 0 713 418 B1 ist ein Verfahren und eine Vorrichtung zum Abscheiden von Sand aus mit Sand und organischen Stoffen beladenem Abwasser in einem stehenden Behälter bekannt. Im oberen Bereich des Behälters ist eine Beschickungseinrichtung vorgesehen. An den unteren Bereich des Behälters grenzt eine Abzugseinrichtung für das abgetrennte anorganische Material in Form einer Schneckenfördereinrichtung an. In diesem Bereich ist auch eine Frischwasserzuleitung vorgesehen, über die Frischwasser in eine Umlaufströmung versetzt wird, in der die spezifisch leichteren organischen Stoffe nach oben zu einem Überlauf bewegt werden, während die spezifisch schwereren Sandkörner gegen den Behälterboden absinken und dort einen Sandkuchen bilden, der von einem Rührwerk mechanisch gerührt wird, so dass die einzelnen Sandkörner aneinander reiben und dabei allenfalls anhaftende organische Stoffe abgerieben werden. Die abgeriebenen organischen Stoffe werden mit Hilfe der durch das zugeführte Frischwasser zeugten aufwärtsgerichteten Strömung nach oben mitgenommen. Damit wird der verschmutzte Sand im Festbett mechanisch gerührt und lediglich in einer Menge ausgetragen, die eine vorgegebene Mindesthöhe des abgesetzten Sandes sicherstellt. Die Abreinigungswirkung beruht damit im Wesentlichen auf dem mechanischen Bewegen der Sandkörner im Festbett über das Rührwerk, welches mit entsprechender Leistung ausgelegt sein muss.

Aus der DE 198 44 006 A1 ist ein Abscheideverfahren von mineralischem Sand aus einem zu behandelnden Gemisch aus Wasser, organischen Bestandteilen und Sand bekannt. Das Gemisch, das von oben in einen Absetzbehälter eingeführt wird, wird mit feinblasiger Luft von unten nach oben durchperlt, so dass in vertikaler Richtung eine Trennung der Partikel nach ihrer Dichte erfolgt. Aufgrund der höheren Dichte wird der abgeschiedene Sand geregelt abgeführt. Das Gemisch aus Sand, Wasser und organischen Bestandteilen kann während des Luftdurchperlens zusätzlich mechanisch gerührt werden. Der im Bodenbereich in einem Festbett abgesetzte Sand kann dazu genutzt werden, das beim Rühren einzutragende Drehmoment zu bestimmen. Die Fluidität des Gemisches kann durch zusätzliche Wasserzugabe von oben gesteuert werden. Die Vorrichtung kann die Aufgabe eines Sandseparators/Sandfangs mit übernehmen. Durch das feinblasige Durchperlen des Gemisches aus Sand, Wasser und organischen Bestandteilen erfolgt eine entsprechende Bewegung des Gemisches, die zu der angestrebten Separierwirkung führt.

Aus der US 1 277 145 A ist eine zusätzliche Hebevorrichtung bekannt.

### AUFGABE DER ERFINDUNG

Der Erfindung liegt die Aufgabe zugrunde, eine Vorrichtung der eingangs beschriebenen Art so weiterzubilden, dass eine hohe Reinigungswirkung erreicht wird, indem das an dem anorganischen Material haftende organische Material von diesem weitgehend gelöst wird und in der Folge das organische Material einerseits und das anorganische Material andererseits getrennt abgeführt werden können. Dabei kommt es darauf an, einen einfachen Aufbau und eine preiswerte Herstellung und einen kostengünstigen Betrieb der Vorrichtung zu ermöglichen.

### LÖSUNG

Die Aufgabe der Erfindung wird erfindungsgemäß durch die Merkmale der unabhängigen Patentansprüche gelöst.

### BESCHREIBUNG DER ERFINDUNG

Die Vorrichtung arbeitet, wie im Stand der Technik auch, mit einem Wirbelbett, um die im Vergleich zu einem Festbett effektivere Trennung zwischen anorganischem Material und daran haftendem organischen Material durchzuführen. Es wird also im unteren Bereich des Behälters eine fluidisierte Sandschicht als Wirbelschicht aufrechterhalten, wobei die dadurch initiierte Bewegung der Sandkörner dazu führt, dass organisches Material von anorganischem Material abgelöst, zerkleinert und durch das Waschwasser nach oben ausgetragen wird. Allerdings wird das Wirbelbett nicht nur durch die Zugabe des Waschwassers erzeugt und aufrechterhalten. Es ist vielmehr zusätzlich eine Hebevorrichtung vorgesehen, die zusammen mit der Zufuhreinrichtung für das Waschwasser im unteren Bereich des Behälters die fluidisierte Schicht erzeugt. Die Hebevorrichtung erbringt eine Bewegungskomponente auf die Sandkörner vertikal nach oben, also in der gleichen Richtung, in der auch das zugeführte Waschwasser eine vertikale Bewegungskomponente auf die Sandkörner ausübt. Es wird eine Umlaufströmung in dem Wirbelbett initiiert und so in Bereichen der Wirbelschicht eine Gegenstromwäsche zeugt. Da die Hebevorrichtung zur Erzeugung und Aufrechterhaltung der Wirbelschicht beiträgt, ergibt sich vorteilhaft die Möglichkeit eines geringeren Wasserverbrauchs der Waschwasserzuführung. Die Auslegung der Vorrichtung kann so getroffen sein, dass die Waschwasserzuführung allein eine Überschreitung des Wirbelpunktes noch nicht ermöglicht, sondern hierzu die vertikale Bewegungskomponente der Hebeeinrichtung erforderlich ist. Es ist aber auch möglich, das Waschwasser in größeren Mengen zuzuführen, die alleine ausreicht, den Wirbelpunkt zu überschreiten, um zusätzlich die Umaufströmung und die damit verursachte Gegenstromwäsche im Bereich des Wirbelbettes aufzuprägen. Es entsteht eine verbesserte Abreinigungswirkung. Die Vorrichtung lässt sich mit Vorteil auch dann sinnvoll anwenden, wenn relativ kleine Mengen an mit organischem Material verschmutztem anorganischem Material voneinander abgetrennt werden sollen. Die Hebevorrichtung übt auf das Gemisch aus anorganischem und organischem Material im Bereich des Wirbelbettes eine aufwärtsgerichtete Bewegungskomponente aus. Sie unterscheidet sich damit deutlich von einem Rührwerk, welches auf die Sandkörner eine im Wesentlichen horizontal gerichtete Bewegungskomponente ausübt. Der zusätzliche Einsatz einer Hebevorrichtung hat den weiteren Vorteil, dass das Wirbelbett durch die beschriebene Umlaufströmung auf vorgegebener Bewegungsbahn bewegt wird. Dadurch wird einer Kanalbildung, wie sie für ein Arbeiten im Festbett typisch ist, von vornherein entgegengewirkt.

Da die Vorrichtung unter Aufrechterhaltung eines Wirbelbettes arbeitet, besteht - im Gegensatz zu einem Arbeiten in einem Festbett - die Möglichkeit, die Ausdehnung der Wirbelschicht mit einer Drucksonde zu erfassen. Erfindungsgemäß ist eine solche Sonde im Bereich der fluidisierten Schicht an der Wandung des Behälters vorgesehen, um die Ausdehnungshöhe der fluidisierten Schicht durch Steuerung der Abzugseinrichtung für das abgetrennte gereinigte anorganische Material zu steuern, wobei die Abzugseinrichtung als Schneckenfördereinrichtung ausgebildet ist. Die Abzugseinrichtung für das abgetrennte anorganische Material wird taktweise betrieben. Im unteren Bereich des Behälters tritt der gereinigte Sand durch die ringförmige Querschnittsfläche im Schutzkragen nach unten durch. Er lagert sich dort in Form eines Festbettes ab. Bei fortgesetztem Betrieb würde dieses Festbett nach oben wandern. Dies ist nur bedingt zulässig, da die Waschwasserzufuhr nicht behindert werden darf. Um hier ein ordnungsgemäßes Arbeiten sicherzustellen, muss der gereinigte Sand aus seinem Festbett immer wieder entfernt und damit die Höhe des Festbettes durch die Betätigung der Abzugseinrichtung in gewissen Grenzen konstant gehalten werden.

Eine besonders einfache und preiswerte Realisierung der Hebevorrichtung ergibt sich durch eine senkrecht im Zentrum des Behälters angeordnete Förderschnecke, die über eine Welle angetrieben ist. Die Welle ragt von oben in den Behälter ein, so dass der Antrieb in einfacher Weise oberhalb des Behälters und damit außerhalb des Wasserspiegels angeordnet ist. Die Hebevorrichtung in Form einer solchen Förderschnecke kann gleichzeitig auch mit Rührarmen versehen sein, so dass hier eine gemeinsam antreibbare Einheit geschaffen wird, die sowohl die Funktion der Hebevorrichtung wie auch die Funktion eines Rührwerks erbringen kann. Für die Abreinigungswirkung ist an sich die Anordnung eines Rührwerks nicht erforderlich. Es kann jedoch sinnvoll sein, einen Aufbau einer vergleichsweise festen organischen Schicht oberhalb der Ausdehnungshöhe der Wirbelschicht mit einem Rührarm immer wieder zu lockern bzw. aufzubrechen, damit einerseits die Abfuhr des organischen Materials sichergestellt ist und andererseits kontinuierlich neues abzureinigendes Material, welches durch die Beschickungseinrichtung oben aufgegeben wird, nach unten in die Reinigungszone der Wirbelschicht übertreten kann.

Die Hebevorrichtung kann, wie am Beispiel einer Förderschnecke gezeigt, als mechanisch arbeitende Einrichtung ausgebildet sein. Diese ist wirkungsmäßig im Zentrum bzw. in einem zentralen Ringbereich des Behälters angeordnet, vorzugsweise in einem solchen Bereich des Behälters, der einen zylindrischen vertikalen Abschnitt bildet. Es ist aber auch möglich, die Hebeeinrichtung als pneumatisch wirkende Einrichtung auszubilden, die mit einem Gas, beispielsweise mit Luft, arbeitet, so dass die Hebeeinrichtung einen Druckluftheber darstellt. Die Zuführung der Luft erfolgt zweckmässig von oben. Die Luft wird im unteren Bereich der Wirbelschicht gezielt zum Ausströmen gebracht, also unterhalb des Wasserspiegels, so dass durch die Luft auf das organische und anorganische Material eine vertikale Bewegungskomponente ausgeübt wird, die zusammen mit der Waschwasserzufuhr die Erzeugung und Aufrechterhaltung der Wirbelschicht ermöglicht. Es ist auch möglich, mehrere Hebevorrichtungen in Kombination anzuwenden, beispielsweise eine Kombination aus einer mechanischen und einer pneumatischen Hebevorrichtung. Die Hebevorrichtung kann auch Bestandteil eines Rührwerks mit von oben angetriebener Welle sein, wobei die Hebevorrichtung in erster Linie eine vertikale Bewegungskomponente zur Verfügung stellen muss, während die horizontale Bewegungskomponente des Rührwerks nur zusätzlich genutzt wird.

Die Vorrichtung weist eine Zufuhreinrichtung für Waschwasser auf, die etwa als ringförmige Leitung mit Austrittsöffnungen ausgebildet ist. Diese Zufuhreinrichtung ist damit anders ausgebildet als der im Stand der Technik bekannte Lochboden mit nach oben ausgerichteten düsenförmigen Öffnungen, die über die Querschnittsfläche verteilt angeordnet sind. Solche düsenförmigen Öffnungen können verschmutzen oder gar verstopfen, so dass ein partieller Verschluss des Lochbodens möglich ist. Die Zufuhreinrichtung in Form einer ringförmigen Leitung mit Austrittsöffnungen ist dagegen weniger störanfällig. Die Anzahl der Austrittsöffnungen ist grundsätzlich geringer als bei einem Lochboden. Es genügt eine solche ringförmige Leitung, da das Wirbelbett nicht über die gesamte horizontale Querschnittsfläche ausgedehnt wird, sondern gleichsam in einem ringförmigen Spalt zwischen der Hebevorrichtung und dem Innendurchmesser des Behälters erzeugt und aufrechterhalten wird. Das Waschwasser wird damit gezielt in diesem ringförmigen Spalt zugeführt.

Besonders sinnvoll ist es, wenn oberhalb der ringförmigen Leitung an der Innenwandung des Behälters ein Schutzkragen vorgesehen ist, der nach unten einen Freiraum bildet, in welchem die ringförmige Leitung angeordnet ist. Die Austrittsöffnungen der ringförmigen Leitung können nach oben in den Freiraum hinein ausgerichtet angeordnet sein. Dieser Freiraum wird in allen Betriebszuständen frei von abgesetztem Sand gehalten, so dass eine Vierschmutzung und ein Zusetzen der Austrittsöffnungen nicht möglich ist. Die Austrittsöffnungen können aber auch seitlich oder nach unten gerichtet an der in dem Freiraum angeordneten ringförmigen Leitung vorgesehen sein. Der Schutzkragen ist so gestaltet, dass das Waschwasser nach seinem Austritt aus den Austrittsöffnungen der ringförmigen Leitung einen Strömungpfad beschreibt, der zunächst oder auf seinem Weg nach unten gerichtet ist, seine Bewegungsrichtung dann umkehrt und durch den Raum nach oben abströmt, der von dem Schutzkragen eingeschlossen wird. Dabei ist es zweckmässig, dass die Welle der Hebeeinrichtung oder die Zufuhr einer mit Luft arbeitenden Hebeeinrichtung bis unter die ringförmige Leitung reichend vorgesehen ist, so dass bereits im Bereich der Aufwärtsströmung des Waschwassers ein Ringquerschnitt gebildet ist. Wenn die Hebevorrichtung als Förderschnecke ausgebildet ist, kann am unteren Ende der Förderschnecke eine Prallplatte vorgesehen sein, deren Außendurchmesser mit dem Außendurchmesser der Förderwendel der Förderschnecke übereinstimmt. Auch dies dient der Ausbildung eines ringförmigen Querschnittes für die Erzeugung des Wirbelbettes mit der überlagerten Umlaufströmung. Das Waschwasser wird damit auf den Ringquerschnitt konzentriert und die Abweisplatte für das aufströmende Waschwasser verbessert die Hebewirkung der Förderschnecke.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht der gesamten Vorrich- tung.
- **Fig. 2**: zeigt einen Detailausschnitt, teilweise geschnitten, gemäss der Ausführungsform der Fig. 1 der Vorrichtung.
- **Fig. 3**: zeigt eine ähnliche Schnittdarstellung wie Fig. 2, jedoch bei ei- ner anderen Ausführungsform.
- **Fig. 4**: zeigt eine ähnliche Schnittdarstellung wie die Fig. 2 und 3, je- doch bei einer weiteren Ausführungsform.

### FIGURENBESCHREIBUNG

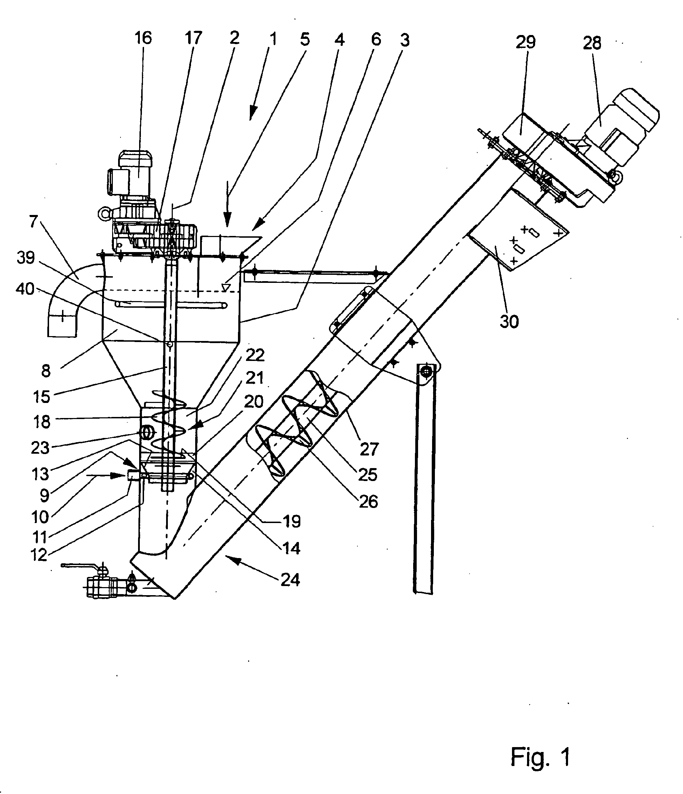

**Fig. 1** zeigt die Vorrichtung in ihrer Gesamtheit. Die Vorrichtung weist einen Behälter 1 mit vertikaler Achse 2 auf. Der Behälter 1 besitzt eine Wandung 3, vorzugsweise in Rundbauweise, und ist mit seiner Achse 2 vertikal ausgerichtet angeordnet. Die Wandung 3 des Behälters 1 ist aus mehreren zylindrischen und/oder kegelstumpfförmigen Stücken zusammengesetzt, insbesondere so, dass von unten nach oben der Querschnitt zunehmend vorgesehen ist, wie dies Fig. 1 zeigt. Der Behälter 1 weist in seinem oberen Bereich eine Beschickungseinrichtung 4, beispielsweise in Form eines Trichters auf, durch den das mit organischem Material verschmutzte anorganische Material gemäss Pfeil 5 in den Behälter 1 eingegeben wird. Der im Betrieb der Vorrichtung sich einstellende Wasserspiegel 6 ist angedeutet. Im oberen Bereich schliesst an die Wandung 3 des Behälters eine Einrichtung 7 zur Abfuhr organischen Materials und Flüssigkeit an. Statt einer Einrichtung 7 können auch zwei getrennte Einrichtungen auf ungleicher Höhe angeordnet sein, wobei die eine Einrichtung zur Abfuhr von Flüssigkeit und die andere Einrichtung zur Abfuhr von organischem Material ausgebildet sind. Die Einrichtung zur Abfuhr von organischem Material ist unterhalb der Einrichtung zur Abfuhr von Flüssigkeit angeordnet. Sie schließt an einen Sammelraum 8 an, in dem sich im Betrieb organisches Material anreichert.

Im unteren Bereich des Behälters 1 ist eine Zufuhreinrichtung 9 für Waschwasser vorgesehen, mit deren Hilfe Waschwasser gemäss Pfeil 10 in das Innere des Behälters 1 eingeleitet wird. Ein Einlassstutzen 11 steht in kontinuierlicher Verbindung zu einer ringförmigen Leitung 12 im Inneren des Behälters 1, über die die Aufgabe des Waschwassers erfolgt.

Oberhalb der ringförmigen Leitung 12 befindet sich ein Schutzkragen 13, der innen an die Wandung 3 des Behälters 1 anschließt, sich nach unten trichterförmig verjüngt und gegebenenfalls in einem zylindrischen Abschnitt endet, dessen unteres Ende unterhalb der Ringleitung 12 angeordnet ist. Damit wird in dem Zwickel zwischen Wandung 3 und Schutzkragen 13 ein Freiraum 14 geschaffen, der zur Unterbringung der ringförmigen Leitung 12 herangezogen und bestimmt ist.

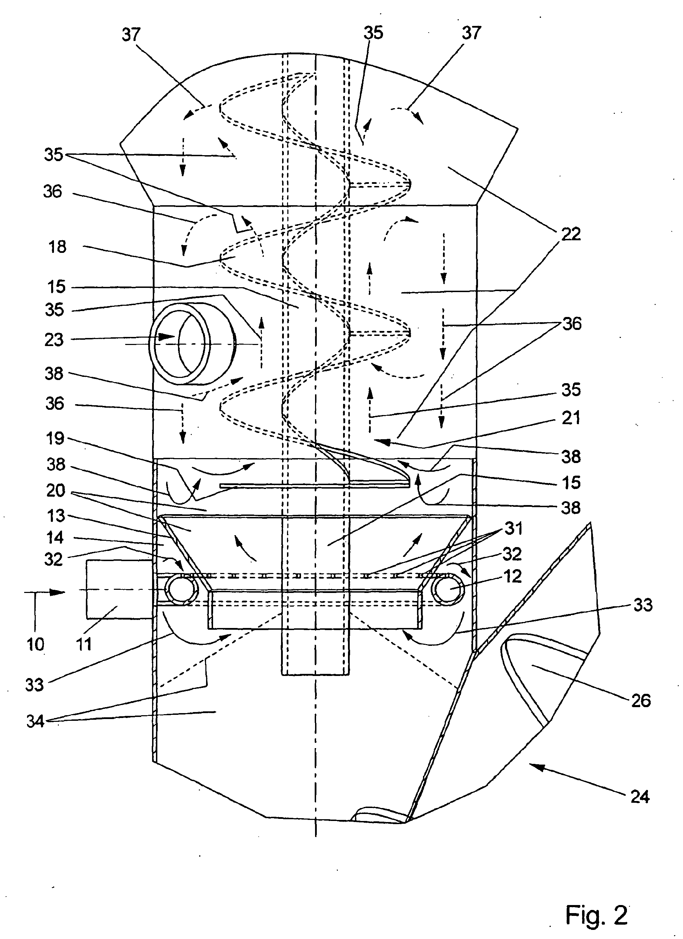

Von oben reicht in den Behälter 1 eine Welle 15, die über einen Motor 16 und ein Untersetzungsgetriebe 17 rotierend antreibbar ist. Die Welle 15 besitzt in einem Bereich, der etwas oberhalb des Schutzkragens 13 beginnen kann, eine Förderschnecke 18. Die Förderschnecke 18 kann an ihrem unteren Ende über eine Abweisplatte 19 insoweit geschlossen ausgebildet sein, so dass zwischen dem Außendurchmesser der Abweisplatte 19 und der inneren Wandung 3 des Behälters 1 ein Ringquerschnitt 20 gebildet wird, von dem ausgehend nach oben eine Hebevorrichtung 21 auf das Gemisch organisch verschmutzten anorganischen Materials und Wasser einwirkt. Die Hebevorrichtung 21 ist hier als mechanische Hebevorrichtung ausgebildet. Wesentliche Bestandteile dieser mechanischen Hebevorrichtung sind die Welle 15 und die Förderschnecke 18. Durch die Wirkung der Hebevorrichtung wird eine aufwärtsgerichtete Bewegungskomponente auf das anorganische und ganische Material ausgeübt. Die Verhältnisse im Einzelnen werden nachfolgend anhand der Fig. 2 erläutert. Die Welle 15 erstreckt sich mit ihrem unteren Ende durch den Schutzkragen 13 hindurch. Sie endet unterhalb desselben und bildet damit den Ringquerschnitt 20 auch bereits im Bereich des Schutzkragens 13 vor.

Etwa zwischen dem Schutzkragen 13 bis zum Ende der Hebevorrichtung 21 bzw. der Förderschnecke 18 bzw. geringfügig darüber hinaus bildet sich beim Betrieb der Vorrichtung eine fluidisierte Schicht 22, also ein Wirbelbett aus. Relativ zur Höhe bzw. Ausdehnung der fluidisierten Schicht 22 ist außen an der Wandung 3 des Behälters 1 eine Sonde 23 vorgesehen. Die Sonde 23 dient der Erfassung der Dichte der Wirbelschicht. Aus den gemessenen Drucksignalen kann ein Rückschluss auf die Dichte des Gemisches in der fluidisierten Schicht 22 und damit auf die Ausdehnung der Wirbelschicht folgen. Diese Signale werden zweckmässig dazu benutzt, das gereinigte anorganische Material, welches durch den ringförmigen Querschnitt im Bereich des Schutzkragens 13 nach unten durchtritt und sich dort ablagert, mit Hilfe einer am unteren Ende des Behälters 1 angeschlossenen Abzugseinrichtung 24 schräg nach oben hinwegzufördern. Wesentlicher Bestandteil der Abzugseinrichtung 24 für das anorganische Material ist eine Schneckenfördereinrichtung mit Welle 25, Förderschnecke 26 sowie Gehäuse 27. Die Schneckenfördereinrichtung mit der Welle 25 wird über einen Motor 28 und ein nachgeschaltetes Getriebe 29 taktweise angetrieben. Im oberen Bereich des Gehäuses 27 befindet sich eine Schurre 30, mit deren Hilfe das abgeförderte gereinigte anorganische Material oberhalb des Wasserspiegels 6 abgegeben wird.

Anhand der Fig. 2 seien die Verhältnisse während des Betriebs der Vorrichtung erläutert. Zu Beginn eines Betriebs wird die Vorrichtung mit gereinigtem anorganischen Material, also mit Sand, gefüllt, wobei sich der Sand im unteren Bereich ablagert und ein Sandkegel entsteht, der etwa im Bereich des oberen Endes des Schutzkragens endet, so dass der innere Querschnitt des Schutzkragens mehr oder weniger vollständig ausgefüllt ist. Sodann wird die Zufuhreinrichtung 9 für Waschwasser in Betrieb gesetzt, so dass Waschwasser gemäss Pfeil 10 über den Einlassstutzen 11 in die ringförmige Leitung 12 gelangt. Die ringförmige Leitung 12 weist nach oben gerichtete Austrittsöffnungen 31 auf. Die Austrittsöffnungen 31 sind über den Umfang der ringförmigen Leitung 12 regelmäßig verteilt angeordnet. Das Waschwasser tritt durch die Austrittsöffnungen 31 der ringförmigen Leitungen 12 in den Freiraum 14 unterhalb des Schutzkragens 13 aus. Es ist erkennbar, dass sich in diesem Freiraum 14 kein Sand, sondern Luft und/oder Wasser befindet, so dass auch im Stillstand der Vorrichtung die Austrittsöffnungen weder verstopfen, verschmutzen noch verzopfen können. Das austretende Waschwasser kehrt gemäss Pfeil 32 zunächst seine Strömungsrichtung um und unterströmt dann den unteren Rand des Schutzkragens 13 gemäss Pfeil 33. Dabei nimmt es gereinigten Sand nach oben mit, indem es durch den Ringraum zwischen Schutzkragen 13 und Welle 15 weiter nach oben strömt, während im unteren Bereich unterhalb des Schutzkragens 13 ein durch gestrichelte Linienführung angedeuteter abgesetzter Sandhaufen 34 verbleibt. Durch die Mitnahme des gereinigten Sandes nach oben steigt das Wasser bis zum Wasserspiegel 6 (Fig. 1) an und es bildet sich gleichzeitig über einen Teil der Höhe eine fluidisierte Schicht aus, innerhalb der sich die Sandkörner nach Art eines Wirbelbettes bewegen. Sobald der Motor 16 und damit die Hebevorrichtung 21 in Gang gesetzt wird, wirkt eine zusätzliche Bewegungskomponente in vertikaler Richtung aufwärts auf die gereinigten Sandkörner ein. Das Wirbelbett dehnt sich dabei zu der fluidisierten Schicht 22 nach oben aus. Es endet etwa am oberen Ende der Förderschnecke 18. Durch das Zusammenspiel des nach oben strömenden Waschwassers einerseits und der Hebevorrichtung 21 andererseits erhält die fluidisierte Schicht 22 nicht nur ihre endgültige Ausdehnungshöhe. Gleichzeitig wird der fluidisierten Schicht 22 eine Umwälzströmung aufgeprägt, die durch die verschiedenen Pfeildarstellungen innerhalb der fluidisierten Schicht 22 verdeutlicht wird. Im radial inneren Bereich, insbesondere zwischen Förderschnecke 18 und Welle 15, werden sich die Sandkörner in der fluidisierten Schicht 22 überwiegend gemäss den Pfeilen 35 nach oben bewegen, während auf größerem Radius im Bereich der Wandung 3 eine Bewegungsrichtung gemäss den Pfeilen 36 nach unten überwiegend eintritt. Es entsteht, wie dargestellt, eine ringförmige WalzenStrömung, wobei die Strömungsumkehr durch Pfeile 37 und 38 verdeutlicht ist. Die Strömungsumkehr im unteren Bereich kann sich bis in den ringförmigen Querschnitt auf der Höhe des Schutzkragens 13 erstrecken, während das obere Ende der Walzenströmung auch oberhalb des oberen Endes der Förderschnecke 18 angeordnet sein kann.

Über die Beschickungseinrichtung 4 wird nun mit organischem Material verschmutztes anorganisches Material von oben in den Behälter 1 aufgegeben, wobei sich dieses Material in die fluidisierte Schicht 22 einlagert. Durch die typische Bewegung der Sandkörner, das Auftreffen aufeinander sowie den Kontakt mit der inneren Wandung 3 des Behälters erfolgt ein Loslösen des organischen Materials von dem anorganischen Material, eine Zerkleinerung sowie eine fortgesetzte Reinigung. Das leichtere organische Material wird von dem Waschwasser nach oben mitgenommen, während die Sandkörner mit abnehmendem Verschmutzungsgrad und dabei insgesamt zunehmender Dichte vermehrt nach unten durchsinken und sich im unteren Bereich der fluidisierten Schicht 22 ansammeln. Dabei treten Sandkörner auch durch den Ringraum zwischen Welle 15 und Schutzkragen 13 nach unten durch und lagern sich auf dem Sandhaufen 34 auf. Mit diesem Herausführen von Sandkörnern nach unten unter fortgesetzter Beschickung steigt die Dichte der fluidisierten Schicht 22 an. Dies erkennt die Sonde 23, so dass davon ausgehende Signale über eine Steuereinrichtung dazu benutzt werden, um die Abzugseinrichtung 24 in Gang zu setzen und für eine vorgegebene Zeitspanne anzutreiben. Damit verkleinert sich der abgesetzte Sandhaufen 34 bzw. seine Obergrenze verlagert sich auf ein tieferes Niveau, wodurch wieder vermehrt gereinigte Sandkörner aus der fluidisierten Schicht 22 nach unten durchtreten und sich im Bereich des Sandhaufens 34 ablagern können. Damit verringert sich wiederum die Dichte der fluidisierten Schicht 22. Bei fortgesetzter Beschickung kann sich hier ein mehr oder weniger stationärer Zustand einstellen, so dass das zugeführte Material kontinuierlich abgereinigt wird.

Die innerhalb der fluidisierten Schicht 22 abgelösten organischen Bestandteile, die vergleichsweise leichter sind, werden von dem Waschwasser nach oben mitgenommen und reichem sich in dem Sammelraum 8 an. Die Welle 15 der Hebevorrichtung 21 kann im Bereich des Sammelraums 8, aber auch in anderen Bereichen, mit Rührarmen 39, 40 (Fig. 1) versehen sein, deren Aufgabe im Wesentlichen darin besteht, eine feste Schichtbildung von organischem Material In diesem Bereich immer wieder zu lockern und aufzubrechen, so dass das organische Material über die Einrichtung 7 zusammen mit dem Waschwasser abgeführt wird. Auch im Bereich der fluidisierten Schicht 22 können Rührarme (nicht dargestellt) vorgesehen sein, die zusätzlich zu der Wirkung der erforderlichen Hebevorrichtung 21 den Sandkörnern eine mehr oder weniger horizontale Bewegungskomponente aufprägen.

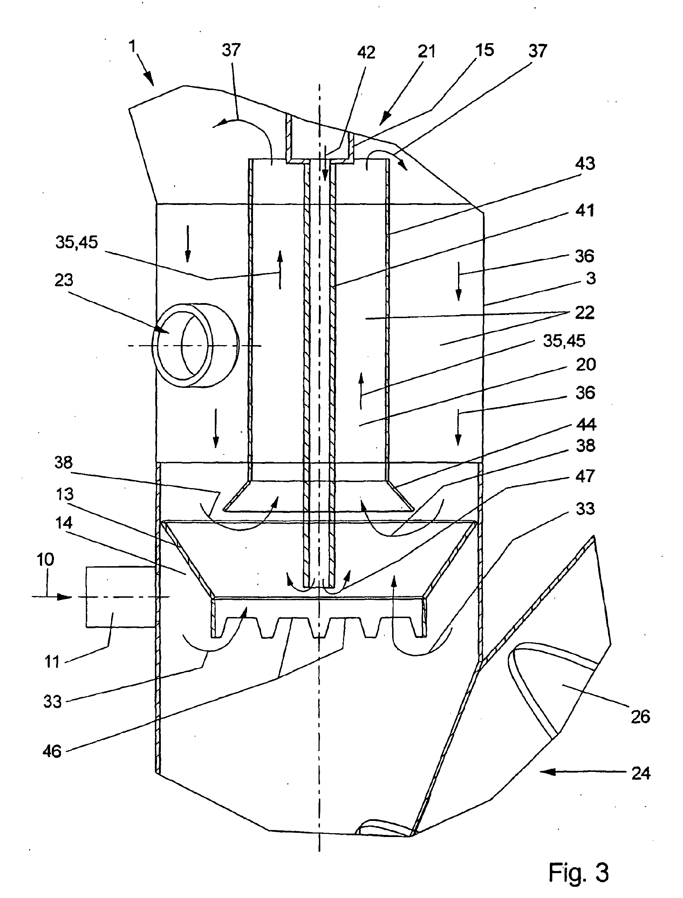

Bei der Ausführungsform gemäss Fig. 3 ist die Hebevorrichtung 21 pneumatisch ausgebildet. Die Welle 15 ist hohl gestaltet und besitzt einen im Durchmesser gestuften Fortsatz 41. Von oben wird Druckluft durch das Innere der Welle 15 und des Fortsatzes 41 gemäss Pfeil 42 eingebracht. Auch hier ist die Welle 15 und der Fortsatz 41 angetrieben, so dass die Druckluft über eine Drehverbindung zugeführt wird. Die Druckluft tritt am unteren Ende des Fortsatzes 41 gemäss Pfeil 47 aus und kehrt bei entsprechender Waschwasserzufuhr ihre Strömungsrichtung um. Mit der Welle 15 ist eine Zylinderwandung 43 drehfest verbunden, die an ihrem unteren Ende einen ausgestellten Fängerkragen 44 aufweisen kann. Die Druckluft strömt innerhalb der Zylinderwandung 43 gemäss Pfeil 45 nach oben, so dass auch hier im Betriebszustand auf die Sandkörner eine nach oben gerichtete Bewegungskomponente gemäss Pfeil 35 erteilt wird. Die Zylinderwandung 43 ist oben offen, so dass hier gemäss Pfeil 37 eine Umkehr der Walzenströmung innerhalb der fluidisierten Schicht 22 erfolgt. Die Zylinderwandung 43 kann mit der Welle 15 verbunden, also rotierend angetrieben sein. Es ist auch möglich, die Zylinderwandung 43 ortsfest an der Wandung 3 aufzuhängen. In beiden Fällen wird auch hier eine ring- oder walzenförmige überlagerte Strömung der fluidisierten Schicht 22 aufgeprägt, wodurch all jene Effekte erreicht werden, die auch anhand der Ausführungsform gemäss Fig. 2 bei einer mechanischen Hebevorrichtung 21 auftreten. Schließlich ist es auch denkbar, dass mechanische und pneumatische Hebevorrichtungen 21 miteinander kombiniert Anwendung finden können.

Die Waschwasserzufuhr ist hier etwas vereinfacht ausgebildet. Auf die ringförmige Leitung 12 ist hier verzichtet, so dass der Freiraum 14 unterhalb des Schutzkragens 13 für die Verteilung des Waschwassers genutzt wird. Die untere Kante des Schutzkragens ist hier mit Zacken bzw. Ausnehmungen 46 versehen, über die das zugeführte Waschwasser gemäss den Pfeilen 33 durch den Raum in dem Schutzkragen 13 nach oben geführt wird. Durch die Zylinderwandung 43 wird die Strömung geführt und vergleichmäßigt, wobei innerhalb der Zylinderwandung 43 die aufwärtsgerichteten Strömungskomponenten überwiegen, während außerhalb der Zylinderwandung 43 die Abwärtsströmung der Umwälzströmung stattfindet. In allen beiden Strömungsquerschnitten herrscht natürlich die Wirbelschicht bzw. die fluidisierte Schicht 22 vor.

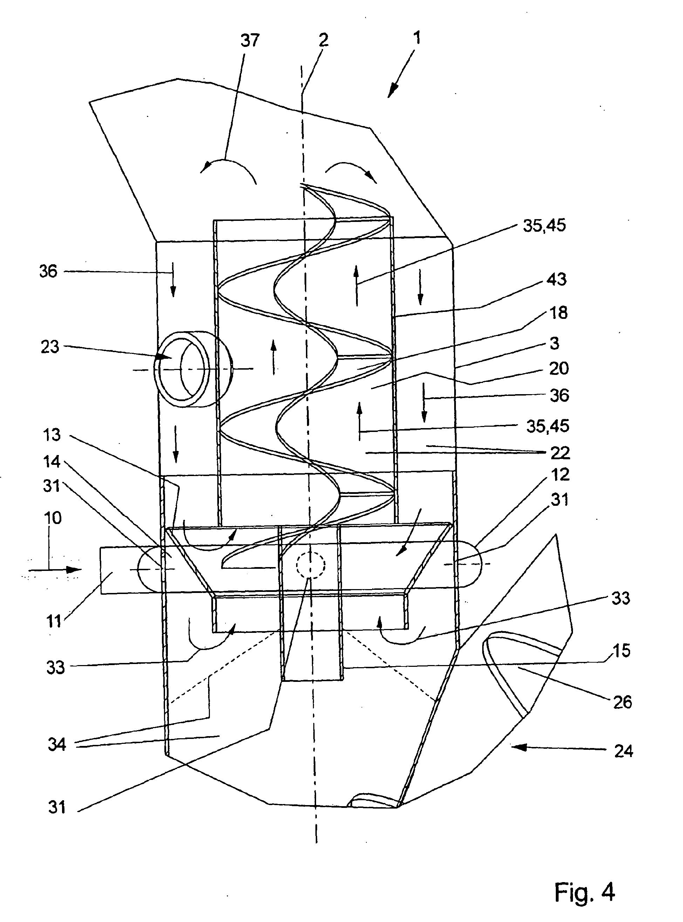

Fig. 4 zeigt eine Ausführungsform, bei der die Zylinderwandung 43 der Förderschnecke 18 zugeordnet ist. Es versteht sich, dass oberhalb der Förderschnecke 18 eine Welle 15 vorgesehen ist (nicht dargestellt), die sich im unteren Bereich der Förderschnecke 18 fortsetzt, während ein großer Bereich der Höhe der Förderschnecke 18 wellenlos ausgebildet ist. Die Zylinderwandung 43 ist mit der Förderschnecke 18 zu einer gemeinsam drehenden Einheit verbunden, die oben und unten offen gestaltet ist. Auch hier herrscht innerhalb der Zylinderwandung 43 eine nach aufwärts gerichtete Bewegungskomponente gemäss den Pfeilen 35, 45 vor. Die ringförmige Leitung 12 ist hier außerhalb der Wandung 3 umlaufend angeordnet, während die Austrittsöffnungen 31 die Wandung 3 durchsetzen. Die Welle 15 kann auch abweichend von der zeichnerischen Darstellung der Fig. 4 durchgehend vorgesehen sein, wie dies Fig. 2 zeigt.

Bei allen Ausführungsformen wird die fluidisierte Schicht 22 durch das Zusammenwirken des aufströmenden Waschwassers und der Hebevorrichtung 21 sichergestellt. Damit ergibt sich nicht nur die fluidisierte Schicht 22, sondem die aufgeprägte Umwälzströmung.

### BEZUGSZEICHENLISTE

| | | | |
|---|---|---|---|
| 1 | Behälter | 11 | Einlassstutzen |
| 2 | Achse | 12 | ringförmige Leitung |
| 3 | Wandung | 13 | Schutzkragen |
| 4 | Beschickungseinrichtung | 14 | Freiraum |
| 5 | Pfeil | 15 | Welle |
| 6 | Wasserspiegel | 16 | Motor |
| 7 | Einrichtung | 17 | Untersetzungsgetriebe |
| 8 | Sammelraum | 18 | Förderschnecke |
| 9 | Zufuhreinrichtung | 19 | Abweisplatte |
| 10 | Pfeil | 20 | Ringquerschnitt |
| | | | |
| 21 | Hebevorrichtung | 31 | Austrittsöffnung |
| 22 | fluidisierte Schicht | 32 | Pfeil |
| 23 | Sonde | 33 | Pfeil |
| 24 | Abzugseinrichtung | 34 | Sandhaufen |
| 25 | Welle | 35 | Pfeil |
| 26 | Förderschnecke | 36 | Pfeil |
| 27 | Gehäuse | 37 | Pfeil |
| 28 | Motor | 38 | Pfeil |
| 29 | Getriebe | 39 | Rührarm |
| 30 | Schurre | 40 | Rührarm |
| | | | |
| 41 | Fortsatz | 47 | Pfeil |
| 42 | Pfeil | | |
| 43 | Zylinderwandung | | |
| 44 | Fängerkragen | | |
| 45 | Pfeil | | |
| 46 | Ausnehmung | | |

## Patentansprüche

1. Verfahren zum Abtrennen von organischem Material von anorganischem Material, insbesondere von organisch verschmutztem Sand von Kläranlagen, wobei verschmutztes anorganisches Material in einen Behälter (1) eingeleitet wird, und das abgetrennte anorganische Material im unteren Bereich des Behälters (1) abgezogen wird und das organische Material im oberen Bereich des Behälters (1) abgeführt wird und Waschwasser im unteren Bereich des Behälters (1) zugeführt wird, wobei oberhalb der Zuführung des Waschwassers im Behälter (1) die Trennung des organischen Materials von dem anorganischen Material in einer fluidisierten Schicht (22) erfolgt und eine im Bereich der fluidisierten Schicht (22) wirksame Hebevorrichtung (21) vorgesehen ist, mit welcher auf das Gemisch aus anorganischem und organischem Material im Bereich des Wirbelbettes der fluidisierten Schicht (22) eine aufwärtsgerichtete Bewegungskomponente ausgeübt wird und dass die Zuführung des Waschwassers und die Hebevorrichtung (21) so aufeinander abgestimmt werden, dass sie im Betrieb durch das Zusammenwirken des aufströmenden Waschwassers und der Hebevorrichtung (21) die fluidisierte Schicht (22) erzeugen, und dass der Druck der fluidisierten Schicht (22) gemessen wird und der Abzug des abgetrennten anorganischen Materials mit Hilfe einer Schneckenfördereinrichtung erfolgt, die in Abhängigkeit des Drucks gesteuert wird.

2. Verfahren nach Anspruch 1, **dadurch gekennzeichnet, dass** das Gemisch aus anorganischem und organischem Material mechanisch oder pneumatisch angehoben wird.

3. Verfahren nach Anspruch 1 oder 2, **dadurch gekennzeichnet, dass** das Waschwasser ringförmig zugeführt wird.

4. Verfahren nach mindestens einem der vorherigen Ansprüche, **dadurch gekennzeichnet, dass** das abgetrennte anorganische Material taktweise abgezogen wird.

5. Vorrichtung zum Abtrennen von organischem Material von anorganischem Material, insbesondere von organisch verschmutztem Sand von Kläranlagen, mit einem Behälter (1), der eine Beschickungseinrichtung (4) für die Einleitung des verschmutzten anorganischen Materials in den Behälter (1) aufweist, mit einer im unteren Bereich des Behälters (1) angeordneten Abzugseinrichtung (24) für das abgetrennte anorganische Material, einer Einrichtung (7) zur Abfuhr des organischen Materials und einer Zufuhreinrichtung (9) für Waschwasser im unteren Bereich des Behälters (1), wobei oberhalb der Zufuhreinrichtung (9) für Waschwasser im Behälter (1) die Trennung des organischen Materials von dem anorganischen Material in einer fluidisierten Schicht (22) erfolgt, und eine im Bereich der fluidisierten Schicht (22) wirksame Hebevorrichtung (21) vorgesehen ist und dass die Zufuhreinrichtung (9) für das Waschwasser im unteren Bereich des Behälters (1) und die Hebevorrichtung (21) so aufeinander abgestimmt sind, dass sie im Betrieb durch das Zusammenwirken des aufströmenden Waschwassers und der Hebevorrichtung (21) die fluidisierte Schicht (22) erzeugen und dass im Bereich der fluidisierten Schicht (22) an einer Wandung (3) des Behälters (1) eine Sonde (23) vorgesehen ist, welche über eine Steuereinrichtung mit der Abzugseinrichtung (24) verbunden ist zum Steuern der Abzugseinrichtung (24) für das abgetrennte anorganische Material, wobei die Abzugseinrichtung (24) als Schneckenfördereinrichtung ausgebildet ist.

6. Vorrichtung nach Anspruch 5, **dadurch gekennzeichnet, dass** die Hebevorrichtung (21) eine senkrecht im Zentrum des Behälters (1) angeordnete Förderschnecke (18) aufweist, die über eine Welle (15) angetrieben ist.

7. Vorrichtung nach Anspruch 5 oder 6, **dadurch gekennzeichnet, dass** die Hebevorrichtung (21) als Druckluftheber ausgebildet ist.

8. Vorrichtung nach mindestens einem der Ansprüche 5 bis 7, **dadurch gekennzeichnet, dass** die Hebevorrichtung (21) Bestandteil eines Rührwerks mit von oben angetriebener Welle (15) ist.

9. Vorrichtung nach mindestens einem der Ansprüche 5 bis 8, **dadurch gekennzeichnet, dass** die Zufuhreinrichtung (9) für Waschwasser als ringförmige Leitung (12) mit Austrittsöffnungen (31) ausgebildet ist.

10. Vorrichtung nach Anspruch 9, **dadurch gekennzeichnet, dass** oberhalb der ringförmigen Leitung (12) an der Innenwandung des Behälters (1) ein Schutzkragen (13) vorgesehen ist, der einen Freiraum (14) bildet und dass die Austrittsöffnungen (31) der ringförmigen Leitung (12) nach oben in den Freiraum (14) hinein ausgerichtet angeordnet sind.

11. Vorrichtung nach mindestens einem der Ansprüche 9 oder 10, **dadurch gekennzeichnet, dass** die Welle (15) der Hebeeinrichtung (21) bis unter die ringförmige Leitung (12) reichend vorgesehen ist, so dass ein Ringquerschnitt (20) für die Aufwärtsströmung des Waschwassers gebildet ist.

12. Vorrichtung nach mindestens einem der Ansprüche 5 bis 11, **dadurch gekennzeichnet, dass** die die Förderschnecke (18) tragende Welle (15) eine Abweisplatte (19) für das aufströmende Waschwasser aufweist.

13. Vorrichtung nach mindestens einem der Ansprüche 5 bis 12, **dadurch gekennzeichnet, dass** die die Hebeeinrichtung (21) tragende Welle (15) zusätzlich Rührarme (39, 40) aufweist.

## Claims

1. A method for separating organic material from inorganic material, particularly sand polluted with organic material coming from sewage treatment plants, wherein polluted inorganic material is introduced into a container (1) and the separated inorganic material is discharged in the lower portion of the container (1) and the organic material is discharged in the upper portion of the container (1) and cleaning water is introduced in the lower portion of the container (1) wherein the separation of the organic material from inorganic material is executed in a fluidized layer (22) above the charging apparatus for the cleaning water in the container (1) and a lifting apparatus (21) is provided that is operative in the area of the fluidized layer (22), by means of which lifting apparatus (21) the mixture of inorganic and organic material is subjected to an upwardly directed component of movement in the area of the turbulent bed of the fluidized layer (22), and that the charging apparatus for the cleaning water and the lifting apparatus (21) are coordinated such that in operation they create the fluidized layer (22) by cooperation of the upwardly flowing cleaning water and the lifting apparatus (21), and that the pressure of the fluidized layer (22) is measured and the discharge of the separated inorganic material is carried out by means of a conveyer spiral that is controlled dependent on the pressure.

2. The method according to claim 1, **characterized in that** the mixture of inorganic and organic material is lifted up mechanically or pneumatically.

3. The method according to claim 1 or 2, **characterized in that** the cleaning water is charged in an annular form.

4. The method according to at least one of the foregoing claims, **characterized in that** the separated inorganic material is discharged in phases.

5. An apparatus for separating organic material from inorganic material, particularly sand polluted with organic material coming from sewage treatment plants, with a container (1) having a feeding apparatus (4) for the introduction of polluted inorganic material into said container (1), with a discharging apparatus (24) arranged in the lower portion of the container (1) for the separated inorganic material, an apparatus (7) for the removal of the organic material and a charging apparatus (9) for the cleaning water in the lower portion of the container (1), wherein the separation of the organic material from inorganic material is executed in a fluidized layer (22) above the charging apparatus (9) in the container (1), and a lifting apparatus (21) is provided that is operative in the area of the fluidized layer (22) and that the charging apparatus (9) for the cleaning water in the lower portion of the container (1) and the lifting apparatus (21) are coordinated such that in operation they create the fluidized layer (22) by cooperation of the upwardly flowing cleaning water and the lifting apparatus (21), and that in the area of the fluidized layer (22) a probe (23) is provided at one side (3) of the container (1), which probe is connected to the discharging apparatus (24) via a control device for the control of the discharging apparatus (24) for the separated inorganic material, the discharging apparatus (24) being designed as a conveyer spiral.

6. The apparatus according to claim 5, **characterized in that** said lifting apparatus (21) includes a conveyor spiral (18) being located vertically in the center portion of said container (1) and being driven by a shaft (15).

7. The apparatus according to claim 5 or 6, **characterized in that** said lifting apparatus (21) is designed as a pneumatic lifter.

8. The apparatus according to at least one of claims 5 to 7, **characterized in that** said lifting apparatus (21) is designed as a part of a stirring device with a shaft (15) that is driven from the top.

9. The apparatus according to at least one of claims 5 to 8, **characterized in that** said charging apparatus (9) for cleaning water is designed as an annular conduit (12) including a plurality of exiting openings (31).

10. The apparatus according to claim 9, **characterized in that** a protecting collar (13) is provided above said annular conduit (12) and at the inner wall of said container (1) forming a free space (14), and that said exiting openings (31) of said annular conduit (12) are arranged directing upwards into the free space (14).

11. The apparatus according to at least one of claims 9 or 10, **characterized in that** said shaft (15) of said lifting apparatus (21) is provided to extend below said annular conduit (12) such that an annular cross-section (20) for an upward flow of the cleaning water is formed.

12. The apparatus according to at least one of claims 5 to 11, **characterized in that** the shaft (15) carrying said conveyor spiral (18) includes a deflecting plate (19) for the cleaning water flowing upwardly.

13. The apparatus according to at least one of claims 5 to 12, **characterized in that** said shaft (15) carrying the lifting apparatus (21) further includes stirring arms (39, 40).

## Revendications

1. Procédé pour séparer une matière organique d'une matière inorganique, particulièrement de sable contaminé organiquement provenant des stations d'épuration, dans lequel une matière inorganique contaminée est injectée dans un réservoir (1), et la matière inorganique séparée est soutirée dans la zone inférieure du réservoir (1) et la matière organique est évacuée dans la partie supérieure du réservoir (1) et de l'eau de lavage est injectée dans la partie inférieure du réservoir (1), sachant que la séparation de la matière organique et de la matière inorganique s'effectue dans une couche fluidisée (22), au-dessus de l'injection de l'eau de lavage dans le réservoir (1), et qu'il est prévu un dispositif de levage (21) agissant dans la zone de la couche fluidisée (22), au moyen duquel une composante de mouvement dirigée vers le haut est exercée sur le mélange de matières organique et inorganique dans la zone du lit fluidisé de la couche fluidisée (22) et que l'injection de l'eau de lavage et le dispositif de levage (21) sont accordés l'un à l'autre de manière à générer, en fonctionnement, la couche fluidisée (22) par le concours de l'eau de lavage ascendante et du dispositif de levage (21), et à ce que soit mesurée la pression de la couche fluidisée (22) et que le soutirage de la matière inorganique séparée soit effectuée au moyen d'un dispositif de convoyage à vis sans fin, qui est commandé en fonction de la pression.

2. Procédé selon la revendication 1, **caractérisé en ce que** le mélange de matières inorganique et organique est relevé mécaniquement ou pneumatiquement.

3. Procédé selon la revendication 1 ou 2, **caractérisé en ce que** l'eau de lavage est injectée sous une forme annulaire.

4. Procédé selon l'une au moins des revendications précédentes, **caractérisé en ce que** la matière inorganique séparée est soutirée par cycles.

5. Dispositif pour séparer une matière organique d'une matière inorganique, particulièrement de sable contaminé organiquement provenant des stations d'épuration, avec un réservoir (1) comportant un dispositif de chargement (4) pour l'injection de la matière inorganique contaminée dans le réservoir (1), avec un dispositif de soutirage (24) disposé à la partie inférieure du réservoir (1) pour la matière inorganique séparée, un dispositif (7) pour l'évacuation de la matière organique et un dispositif d'injection (9) pour de l'eau de lavage à la partie inférieure du réservoir (1), sachant que la séparation de la matière organique et de la matière inorganique s'effectue dans une couche fluidisée (22) au-dessus du dispositif d'injection (9) pour l'eau de lavage dans le réservoir (1) et il est prévu un dispositif de levage (21) agissant dans la zone de la couche fluidisée (22) et que le dispositif d'injection (9) pour l'eau de lavage à la partie inférieure du réservoir (1) et le dispositif de levage (21) sont accordés l'un à l'autre de manière à générer, en fonctionnement, la couche fluidisée (22) par le concours de l'eau de lavage ascendante et du dispositif de levage (21) et qu'il est prévu une sonde (23) dans la zone de la couche fluidisée (22), à une paroi (3) du réservoir (1), laquelle est reliée au dispositif de soutirage (24) via un dispositif de commande pour commander le dispositif de soutirage (24) pour la matière inorganique séparée, sachant que le dispositif de soutirage (24) se présente sous la forme d'un dispositif de convoyage à vis sans fin.

6. Dispositif selon la revendication 5, **caractérisé en ce que** le dispositif de levage (21) comporte une vis sans fin (18) disposée verticalement au centre du réservoir (1), qui est entraînée par un arbre (15).

7. Dispositif selon la revendication 5 ou 6, **caractérisé en ce que** le dispositif de levage (21) se présente sous la forme d'un dispositif de levage à air comprimé.

8. Dispositif selon l'une au moins des revendications 5 à 7, **caractérisé en ce que** le dispositif de levage (21) est une partie constitutive d'un dispositif mélangeur-agitateur avec arbre (15) entraîné par le haut.

9. Dispositif selon l'une au moins des revendications 5 à 8, **caractérisé en ce que** le dispositif d'injection (9) pour l'eau de lavage se présente sous la forme d'un conduit annulaire (12) avec des orifices de sortie (31).

10. Dispositif selon la revendication 9, **caractérisé en ce qu'**il est prévu un collet protecteur (13) au-dessus du conduit annulaire (12), à la paroi intérieure du réservoir (1), qui constitue un espace libre (14), et que les orifices de sortie (31) du conduit annulaire (12) sont disposés vers le haut et débouchent à l'intérieur de l'espace libre (14).

11. Dispositif selon l'une au moins des revendications 9 ou 10, **caractérisé en ce que** l'arbre (15) du dispositif de levage (21) est prévu pour s'étendre jusque sous le conduit annulaire (12), si bien qu'il est constitué une section annulaire (20) pour l'écoulement ascensionnel de l'eau de lavage.

12. Dispositif selon l'une au moins des revendications 5 à 11, **caractérisé en ce que** l'arbre (15) portant la vis sans fin (18) comporte une plaque de déflection (19) pour l'eau de lavage ascendante.

13. Dispositif selon l'une au moins des revendications 5 à 12, **caractérisé en ce que** l'arbre (15) portant le dispositif de levage (21) comporte de surcroît des bras mélangeurs-agitateurs (39, 40).
